# EUROPEAN PATENT SPECIFICATION

(11) **EP 2 661 372 B1**
(45) Date of publication and mention of the grant of the patent: **01.10.2014**
(21) Application number: 11824318.7
(22) Date of filing: 07.01.2011
(51) Int. Cl.: B41J 2/175, B41J 2/14, F16K 17/00, F15B 13/02

(54) **FLUID CONTAINER HAVING PLURALITY OF CHAMBERS AND VALVES**
FLÜSSIGKEITSBEHÄLTER MIT MEHREREN KAMMERN UND VENTILEN
RÉCIPIENT DE FLUIDE À PLURALITÉ DE CHAMBRES ET DE CLAPETS

(43) Date of publication of application: 13.11.2013
(73) Proprietor: Hewlett-Packard Development Company, L.P., Houston, TX 77070 (US)
(72) Inventor: BOYD, Patrick, V., Corvallis OR 97330-4239 (US); OLSEN, David, Corvallis OR 97330-4239 (US); KELLAR, Patricia, A., Corvallis OR 97330-4239 (US)
(74) Representative: Zimmermann, Tankred Klaus
(86) International application number: PCT/US2011/020481
(87) International publication number: WO 2012/094012

(56) References cited:
- WO-A1-2009/049347
- WO-A1-2009/049347
- US-A- 5 737 001
- US-A- 5 737 001
- US-A- 5 912 689
- US-A1- 2002 109 760
- US-A1- 2008 266 370
- US-A1- 2008 266 370
- US-A1- 2009 109 267
- US-B2- 7 445 323

## Description

### BACKGROUND

Fluid containers store fluid to be supplied to other devices. Fluid containers may include multiple chambers and be removably installed in devices such as image forming apparatuses to supply the fluid thereto. Generally, one or more chambers include regulator units to regulate the flow of the fluid in the fluid container and/or the device.

US 2008/0 266 370 discloses an ink cartridge comprising a housing unit, two chambers and a valve for establishing fluid communication between the two chambers.

### BRIEF DESCRIPTION OF THE DRAWINGS

Non-limiting examples of the present disclosure are described in the following description, read with reference to the figures attached hereto and do not limit the scope of the claims. In the figures, identical and similar structures, elements or parts thereof that appear in more than one figure are generally labeled with the same or similar references in the figures in which they appear. Dimensions of components and features illustrated in the figures are chosen primarily for convenience and clarity of presentation and are not necessarily to scale. Referring to the attached figures:
FIG. 1 is a block diagram illustrating a fluid container according to an example.
FIG. 2 is a perspective view illustrating a fluid container according to an example.
FIG. 3A is a block diagram illustrating a regulator unit of the fluid container according to an example.
FIG. 3B is a side view of a regulator valve according to an example.
FIG. 4 is a perspective view illustrating the fluid container of FIG. 1 according to an example.
FIG. 5A, 5B and 5C are chart representational views illustrating states of the regulated chamber of the fluid container of FIG. 1 according to examples.
FIG. 6 is a block diagram illustrating the fluid container of FIG. 1 according to an example.
FIG. 7 is a block diagram illustrating an image forming apparatus according to an example.
FIG. 8 is a block diagram illustrating a fluid container including an integrated multifunctional valve device according to an example.
FIG. 9 is a perspective view illustrating an integrated multifunctional valve device in a disassembled form according to an example.
FIGS. 10A, 10B and 10C are cross-sectional views illustrating the integrated multifunctional valve device of FIG. 9 in an assembled form according to examples.

Throughout the drawings, identical reference numbers designate similar, but not necessarily identical, elements.

### DETAILED DESCRIPTION

In the following detailed description, reference is made to the accompanying drawings which form a part hereof, and in which is illustrated by way of illustration specific examples in which the present disclosure may be practiced. It is to be understood that other examples may be utilized and structural or logical changes may be made without departing from the scope of the invention as claimed. The following detailed description, therefore, is not to be taken in a limiting sense, and the scope of the present disclosure is defined by the appended claims.

Fluid containers store fluid to be supplied to other devices and are available in a variety of fluid storage capacities. Fluid containers may also be removably installed in devices such as image forming apparatuses to supply the fluid thereto. Such fluid containers may include regulator units to regulate the flow of fluid within and/or between the fluid container and, for example, the image forming apparatus. Generally, based at least on the respective fluid storage capacity of the fluid containers, the size, type and/or arrangement of regulator units vary within the respective fluid container. Such regulator unit variations exist even with respect to fluid containers having different fluid storage capacities that are still in the same fluid container family. Thus, such regulator unit variations may increase obstacles to create a common interface for fluid containers within the same fluid container family, increases the number of regulator parts, and increases manufacturing costs.

In the present disclosure, a fluid container is disclosed having a regulated chamber and a free-fluid chamber. The fluid storage capacity of the fluid container may be the combined fluid storage capacities of the regulated chamber and the free-fluid chamber. The free-fluid chamber can vary in size based on the desired fluid storage capacity for the respective fluid container. A regulator unit is disposed within the regulated chamber. Additionally, in examples, the fluid container includes a plurality of valves such that at least one of the valves is configured to selectively isolate the free-fluid chamber from the regulated chamber when the regulated chamber is in a respective state. That is, based on the respective state of the regulated chamber, at least one of the valves stops fluid communication from the regulated chamber to the free-fluid chamber. Thus, the size, type and arrangement of the regulator unit may be based on a predetermined fluid storage capacity of the regulated chamber. In examples, one or more of the valves may be check valves.

The respective state may be a pressurization state in which the regulator unit establishes positive pressure such as a hyperinflation priming and/or purging state. In this state, the additional fluid storage capacity of the free-fluid chamber does not impact the effectiveness of the regulator unit as the free-fluid chamber is isolated from the regulated chamber. In other states, however, such as a backpressure regulation state, the free-fluid chamber is not isolated from the regulated chamber allowing additional fluid to be provided thereto and available, for example, to print. Thus, fluid containers are disclosed in examples in which the same type, size and/or arrangement of a regulator unit disposed inside a regulated chamber may be used for fluid containers having a variety of fluid storage capacities. Accordingly, regulator unit variations may be reduced resulting in decreasing obstacles to creating a common interface for fluid containers within the same fluid container family, decreasing the number of regulator parts and reducing manufacturing costs.

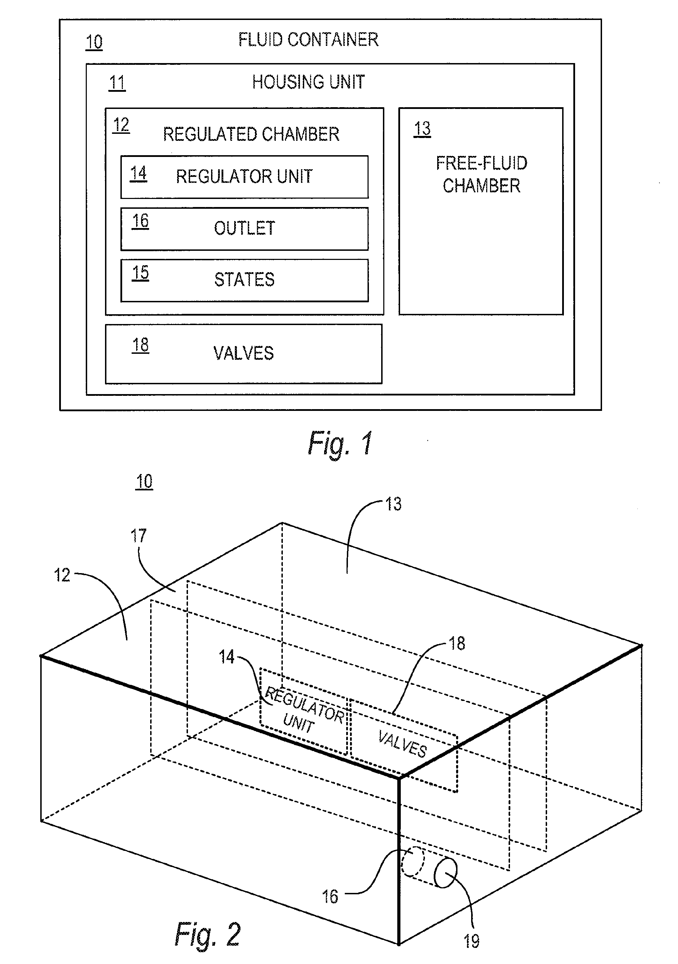

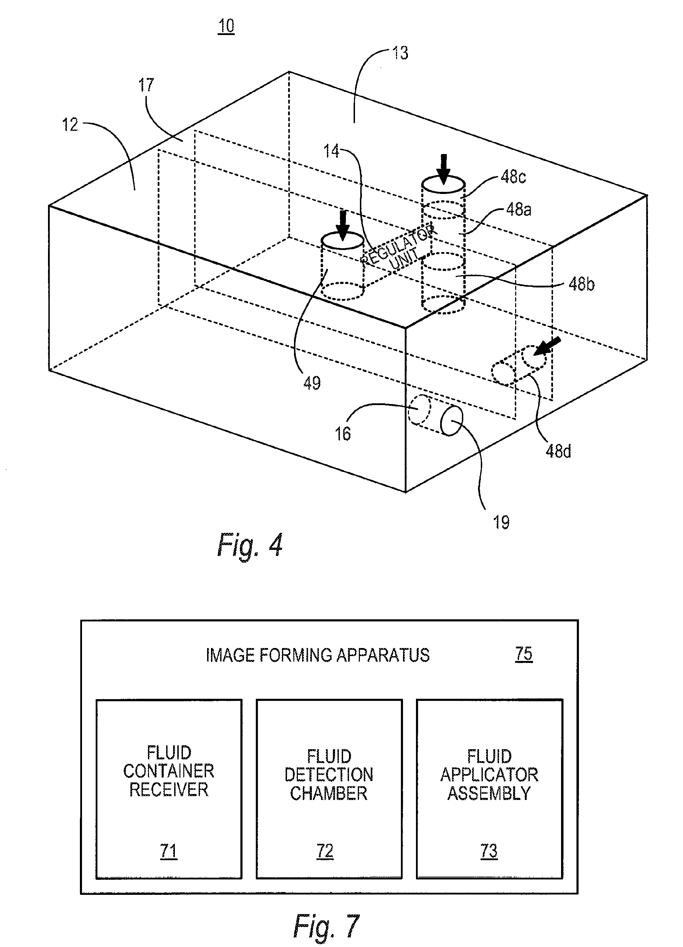

FIG. 1 is a block diagram illustrating a fluid container according to an example. FIG. 2 is a perspective view illustrating a fluid container according to an example. The fluid container 10 may be usable with an image forming apparatus 75 (FIG. 7). Referring to FIGS. 1 and 2, in the present example, the fluid container 10 includes a housing unit 11, a free-fluid chamber 13 disposed in the housing unit 11 and configured to store fluid, and a regulated chamber 12 disposed in the housing unit 11. In an example, the free-fluid chamber 13 and the regulated chamber 12 may be adjacent to each other and share a common wall 17. The free-fluid chamber 13, for example, may be a passive free-fluid chamber. That is, the passive free-fluid chamber does not sense or actively control fluid pressure or flow.

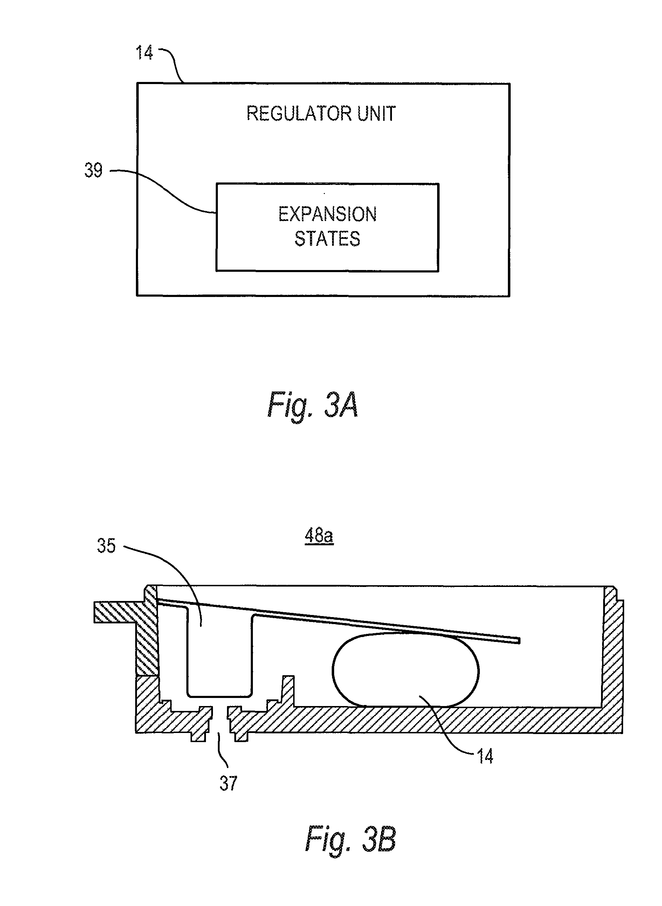

Referring to FIGS. 1 and 2, the regulated chamber 12 includes the regulator unit 14 which is configured to regulate respective fluid therein and includes a plurality of states 15. The regulator unit 14 may include a plurality of expansion states 39 as illustrated in FIG. 3A. An expansion state 39 may correspond to a respective amount of expansion of the regulator unit 14. The regulator unit 14 may be in the form of one or more of a pump, a spring, a biasing mechanism, a variable-volume chamber and an expansion and contraction member. The outlet 16 is configured to transport the respective fluid from the regulated chamber 12. For example, the respective fluid may be transported to a fluid applicator assembly 73 external to the housing unit 11, other chambers within or outside the housing unit 11, or the like.

The fluid container 10 also includes a plurality of valves 18 disposed in the housing unit 11. In an example, at least one of the valves 18 is configured to selectively stop fluid communication between the regulated chamber 12 and the free-fluid chamber 13 based on the respective state of the regulated chamber 12. In examples, each of the valves 18 selectively isolates the free-fluid chamber 13 from the regulated chamber 12. That, is based on the respective state of the regulated chamber 12, the valves 18 selectively isolate the free-fluid chamber 13 from the regulated chamber 12. The fluid container 10 may also include one or more exterior openings 19 such as fluid interconnects, or the like, to establish communication between fluid chambers and the external environment such as an image forming apparatus 75 (FIG. 7) and/or ambient atmosphere.

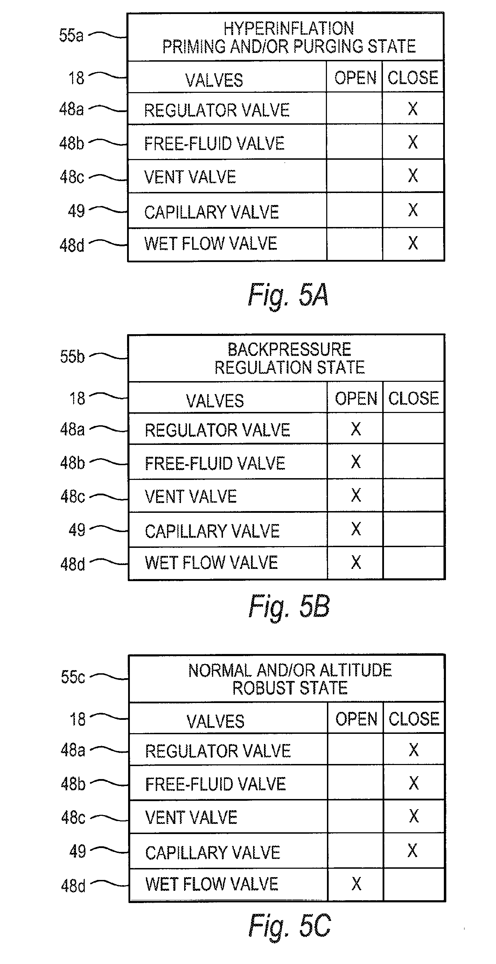

FIG. 4 is a perspective view illustrating the fluid container of FIG. 1 according to an example. Referring to FIGS. 1, 2 and 4, the plurality of valves 18 include at least two of a regulator valve 48a, a free-fluid valve 48b, a vent valve 48c and a wet flow valve 48d. In examples, one or more of the regulator valve 48a, the free-fluid valve 48b, the vent valve 48c and the wet flow valve 48d may be check valves. In the present example, each of the regulator valve 48a, the free-fluid valve 48b, the vent valve 48c and the wet flow valve 48d may be check valves. The fluid container 10 may also include a capillary relief valve 49 configured to selectively transport air from ambient atmosphere to the regulated chamber 12 based on a respective state 15 of the regulated chamber 12. For example, the respective state 15 may be at least one of a hyperinflation priming and/or purging state 55a (FIG. 5A) and a normal and/or altitude robust state 55c (FIG. 5C).

In an example, the wet flow valve 48d is configured to selectively establish fluid communication between the regulated chamber 12 and the free-fluid chamber 13. In examples, a wet flow valve 48d stays below the fluid level in the supply. The regulator valve 48a is configured to selectively establish fluid communication between the regulated chamber 12 and air outside of the housing unit 11 such as ambient atmosphere. For example, the regulator valve 48a may be a pilot-operated valve actuated by a lever actuator member 35 to selectively close one or more respective ports 37 in response to an expansion state 39 of the regulator unit 14 as illustrated in FIGS. 3A and 3B. In an example, the regulator unit 14 may be inflated and deflated through a pump, or the like (not illustrated).

In an example, the free-fluid valve 48b is configured to selectively establish fluid communication between the free-fluid chamber 13 and air outside the housing unit 11 such as ambient atmosphere. For example, the free-fluid valve 48b may be pressure-actuated based on a differential pressure between the free-fluid chamber 13 and the regulated chamber 12. The directional flow through the free-fluid valve 48b in an open state thereof is into the free-fluid chamber 13. In an example, the vent valve 48c is configured to selectively establish fluid communication between the ambient air and the free-fluid chamber 13. The vent valve 48c may be pressure-actuated based on a differential pressure between the ambient atmosphere and the free-fluid chamber 13. The directional flow through the vent valve 48c in an open state thereof is into the free-fluid chamber 13.

Referring to FIG. 4, in the present example, the plurality of valves 18 may include each of the regulator valve 48a, the free-fluid valve 48b, the vent valve 48c, the wet flow valve 48d and the capillary relief valve 49. In the present example, the vent valve 48c, regulator valve 48a and free-fluid valve 48b may be in series. That is, the regulator valve 48a is disposed between the vent valve 48c and the free-fluid valve 48b. The regulator valve 48a selectively receives air from the ambient atmosphere through the vent valve 48c and selectively transports the air to the free-fluid chamber 13 through the free-fluid valve 48b.

In examples, the respective valves 18 may be either normally open or closed. In the present example, the wet flow valve 48d includes a normally open pressure-actuated valve. The regulator valve 48a includes a pilot-operated regulator valve 48a. The regulator valve 48a may also include a lever actuator member 35 configured to move to selectively open and close a port 37 corresponding to the respective expansion state 39 of the regulator unit 14 as illustrated in FIGS. 3A and 3B. The free-fluid valve 48b includes a normally open pressure-actuated valve. The vent valve 48c includes a normally open pressure-actuated valve. The capillary relief valve 49 includes a normally closed relief valve.

In a printing operation, for example, the fluid container 10 may be coupled to an image forming apparatus 75 (FIG. 7) through one or more external openings 19 such as an inkjet printer to supply fluid such as ink to a fluid applicator assembly 73 (FIG. 7) such as a print head assembly to be printed on a media. Ink from the regulated chamber 12 may be transported through the outlet 16 and external opening 19 to a print head assembly to selectively print ink on the media. The ink from the free-fluid chamber 13 is transported (e.g., flows) through the wet flow valve 49 into the regulated chamber 12. Air flows from ambient atmosphere through each of the vent valve 48c, the regulated valve 48a and the free-fluid valve 48b into the free-fluid chamber 13 to replace the ink that previously flowed into the regulated chamber 12.

FIG. 5A, 5B and 5C are chart representational views illustrating states of the regulated chamber of the fluid container of FIG. 1 according to examples. In examples, the plurality of states 15 may be a combination of pressurization and depressurization states. Referring to FIGS. 5A-5C, in the present example, the states 15 include a hyperinflation priming and/or purging state 55a (FIG. 5A), a backpressure regulation state 55b (FIG. 5B), and a normal and/or altitude robust state 55c (FIG. 5C). In the hyperinflation priming and/or purging state 55a, the regulator unit 14 is configured to pressurize the regulated chamber 12 to a positive pressure to perform at least one of a priming function and a purging function, such that the wet flow valve 48d is closed. That is, the regulated chamber 12 has a greater pressure than the free-fluid chamber 13. Further, the regulator valve 48a is closed, the free-fluid valve 48b is closed, the vent valve 48c is closed, and a capillary relief valve 49 is closed.

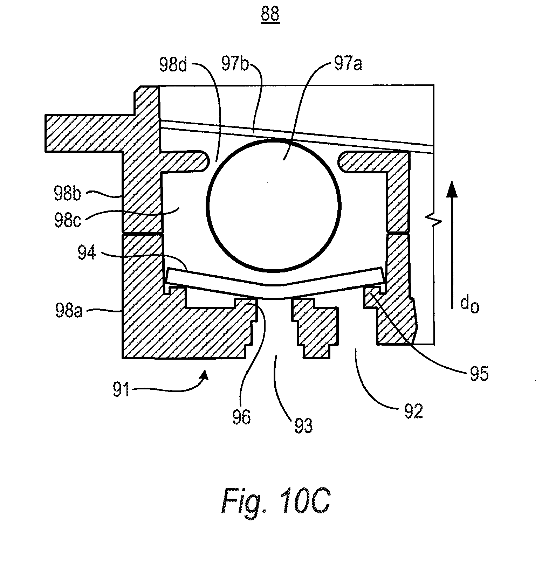

Referring to FIGS. 5A and 10C, for example, in operation in the hyperinflation priming and/or purging state 55a, the regulator unit 14 expands pressurizing the regulated chamber 12 and, for example, moving a lever member 97b in a direction away from a respective port 93. The actuator ball 97a also moves away from the respective port 93. However, pressure within the regulated chamber 12 places a flexible disk member 94 into a closed port position and closes the wet flow valve 48d. That is, the flexible disk member 94 is urged toward and against the respective port 93 to cover it isolating the free-fluid chamber 13 from the regulated chamber 12. In an example, the capillary relief valve 49 is closed

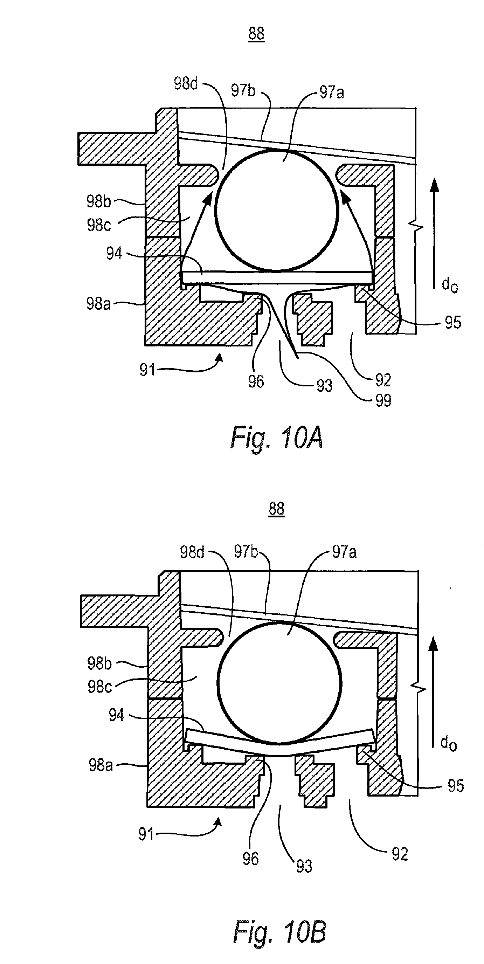

Referring to FIG. 5B and 10A, in the backpressure regulation state 55b, the regulator unit 14 is configured to form a negative pressure in the regulated chamber 12 to perform a controlled fluid delivery function, such that the wet flow valve 48d is open, the regulator valve 48a is open, the free-fluid valve 48b is open, the vent valve 48c is open, and a capillary relief valve 49 is open. That is, pressure in the regulated chamber 12 is less than pressure in the free-fluid chamber 13. For example, in operation in the backpressure regulation state 55b, back pressure expands the regulator unit 14 pressurizing the regulated chamber 12 and, for example, moving a lever member 97b in a direction away from the respective port 93. The actuator ball 97a also moves away from the respective port 93. The flexible disk member 94 is placed in an open port position and the wet flow valve 48d is placed into an open position. That is, air flows through the vent valve 48c and free-fluid valve 48b into the free-fluid chamber 13. Also, fluid flows from the free-fluid chamber 13 through the wet flow valve 48d into the regulated chamber 12. In an example, the capillary relief valve 49 is open. Thus, air passes through the capillary relief valve 49 into the regulated chamber 12, for example, along a capillary path 99.

As illustrated in FIG. 5C and 10B, in the normal and/or altitude robust state 55c, the regulator unit 14 is in a partially expanded state configured to form a negative pressure in the regulated chamber 12 to perform at least a leak prevention function, such that the wet flow valve 48d is open, the regulator valve 48a is closed, the free-fluid valve 48b is closed, the vent valve 48c is closed, and a capillary relief valve 49 is closed. For example, in operation in the normal and/or altitude robust state 55c, the regulator unit 14 partially expands. The flexible disk member 94 is urged against the respective port, for example, by the lever member 97b and/or actuator ball 97a, or the like. Thus, the flexible disk member 94 is placed in a closed port position restricting air from flowing into the free-fluid chamber 13 through the vent valve 48c and free-fluid valve 48b. The wet flow valve 48d is in an open position allowing fluid to flow into the regulated chamber 12 as the pressure in the regulated chamber 12 is less than the pressure in the free-fluid chamber 13. In an example, the capillary relief valve 49 is closed.

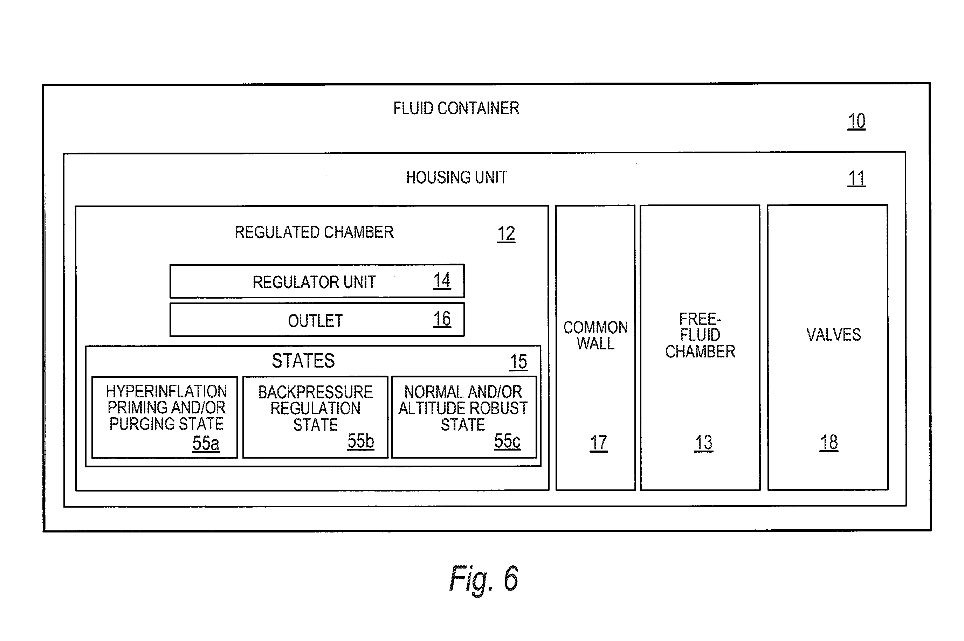

FIG. 6 is a block diagram illustrating the fluid container of FIG. 1 according to an example. FIG. 7 is a block diagram illustrating an image forming apparatus according to an example. Referring to FIGS. 6 and 7, the fluid container 10 may be usable with an image forming apparatus 75 having a fluid container receiver 71, fluid detection chamber 72 and a fluid applicator assembly 73. Referring to FIG. 6, the fluid container 10 includes a housing unit 11 including a free-fluid chamber 13 and a regulated chamber 12 configured to store fluid. In an example, the regulated chamber 12 and the free-fluid chamber 13 may be adjacent to each other and separated by a common wall 17. The regulated chamber 12 includes a regulator unit 14 configured to regulate respective fluid therein and an outlet 16 configured to transport the respective fluid from the regulated chamber 12, for example to another chamber and/or fluid applicator assembly (FIG. 7) inside or outside the housing unit 11. The regulated chamber 12 also includes a plurality of states 15, for example, a hyperinflation priming and/or purging state 55a, a backpressure regulation state 55b, and a normal and/or altitude robust state 55c.

Referring to FIG. 6, the fluid container 10 includes a plurality of valves 18 disposed in the housing unit 11. In an example, at least one of the valves 18 is configured to selectively isolate the free-fluid chamber 13 from the regulated chamber 12 in response to the regulated chamber 12 entering a pressurized state such as the hyperinflation priming and/or purging state 55a (FIG. 5A). That is, at least one of the valves 18 stops fluid communication from the regulated chamber 12 to the free-fluid chamber 13 in response to the regulated chamber 12 entering the hyperinflation priming and/or purging state 55a (FIG. 5A). In the present example, in the hyperinflation priming and/or purging state 55a, the regulator unit 14 is configured to pressurize the regulated chamber 12 to a positive pressure to perform at least one of a priming function and a purging function. That is, pressure in the regulated chamber 12 is greater than pressure in the free-fluid chamber 13. Accordingly, the priming function and/or purging function may be applied to one or more of the fluid detection chamber 72, the regulated chamber 12 and the fluid applicator assembly 73 in response to the regulated chamber 12 entering the hyperinflation priming and/or purging state 55a as previously discussed and illustrated in FIG. 5A.

In an example, in the backpressure regulation state 55b, the regulator unit 14 is configured to form a negative pressure in the regulated chamber 12 to perform a controlled fluid delivery function as previously discussed and illustrated in FIG. 5B. In the normal and/or altitude robust state 55c, the regulator unit 14 is in a partially expanded state configured to form a negative pressure in the regulated chamber 12 to perform at least a leak prevention function as previously discussed and illustrated in FIG. 5C.

Referring to FIGS. 6 and 7, in an example, the fluid container receiver 71 receives a respective fluid container 10 to establish fluid communication with the image forming apparatus 75. The fluid detection chamber 72, for example, may include a chamber (not illustrated) and detection members (not illustrated) to detect the presence and/or amount of fluid in the fluid container 10. The fluid applicator assembly 73 may apply fluid to a media. For example, the fluid applicator assembly 73 may be a print head assembly to eject ink onto paper, or the like. In the present example, the fluid detection chamber 72 and the fluid applicator assembly 73 are disposed in the image forming apparatus 75 and in fluid communication with the regulated chamber 12 of the fluid container 10.

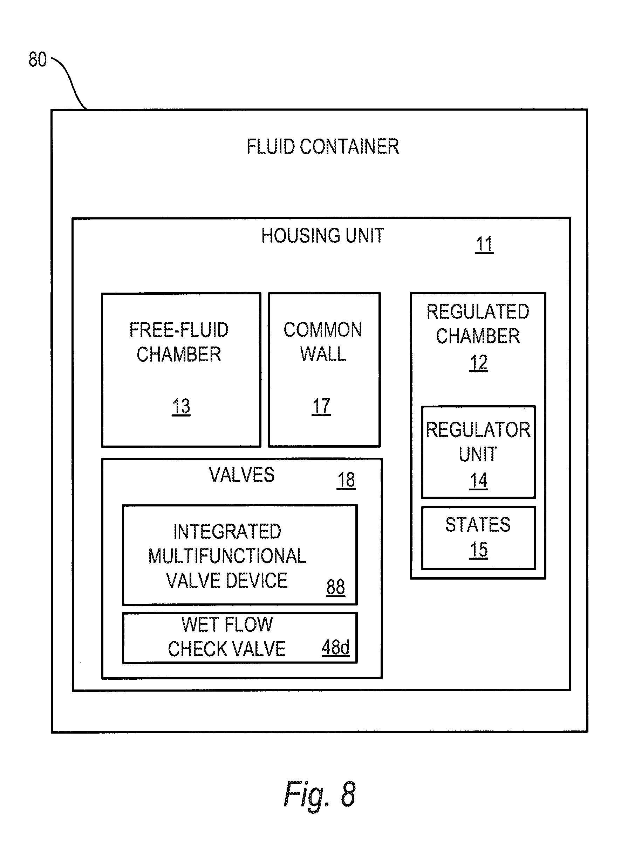

FIG. 8 is a block diagram illustrating a fluid container including an integrated multifunctional valve device according to an example. The fluid container 80 of FIG. 8 corresponds to the fluid container 10 previously described with respect to FIG. 1. Additionally, the fluid container 80 of FIG. 8 includes an integrated multifunctional valve device 88 and a wet flow valve 48d corresponding to the plurality of valves 18 of the fluid container 10 illustrated in FIG. 1. In the present example, each of the integrated multifunctional valve device 88 and the wet flow valve 48d selectively isolate the free-fluid chamber 13 and the regulated chamber 12. That is, fluid communication between is selectively stopped between the free-fluid chamber 13 and the regulated chamber 12.

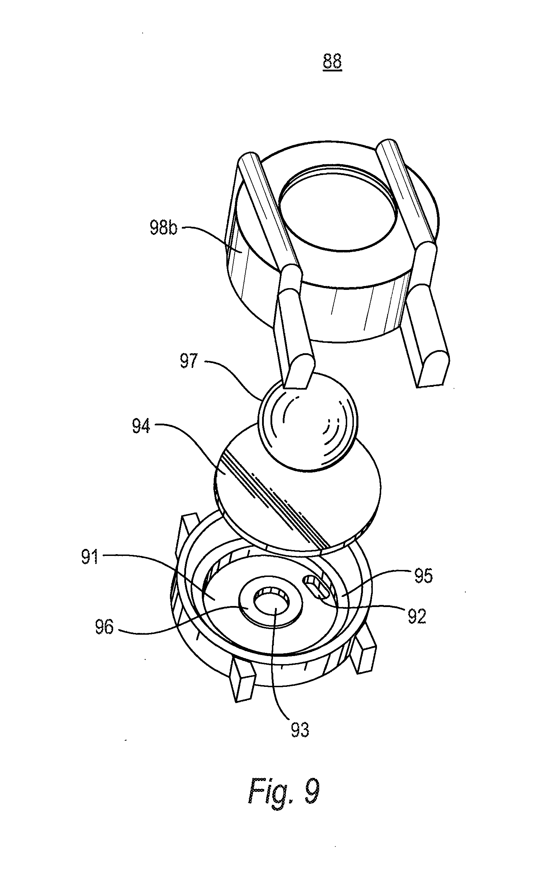

FIG. 9 is a perspective view illustrating an integrated multifunctional valve device in a disassembled form according to an example. FIGS. 10A-10C are cross-sectional views illustrating the integrated multifunctional valve device of FIG. 9 in an assembled form according to examples. The integrated multifunctional valve device 88 may be usable with a fluid container 80, for example, to direct fluid to, from and/or within the fluid container 80. Referring to FIGS. 9-10C, in the present example, the integrated multifunctional valve device 88 may include a surface member 97 having a first port 92 and a second port 93 formed therein, a flexible disk member 94, a first seat member 95 extending outward from the surface member 91, a second seat member 96 extending outward from the surface member 91 and an actuator member 97. The outward direction do, for example, is a direction substantially perpendicular to and away from a surface portion of the surface member 91 in which the respective ports (92 and 93) and are formed. In the present example, the surface member 91 may be a portion of the fluid container 80 such as a housing portion and/or wall portion thereof. In other examples, the surface member 91 may be separate and attachable to the fluid container 80. In an example, the fluid container 80 may also include a first housing member 98a, a second housing member 98b, and a capillary path 99. The first housing member 98a and the second housing member 98b form an enclosed chamber 98c therebetween.

Referring to FIGS. 9-10C, the first housing member 98a may extend outward from the surface member 91 to surround the first port 92, the second port 93, the first seat member 95, the second seat member 96 and the flexible disk member 94. In an example, the first housing member 98a and the surface member 91 may be a unitary member. In other examples, the first housing member 98a may be formed separately, disposed opposite and/or coupled to the surface member 91, for example, through positioning components (not illustrated), adhesives, friction-fit arrangement, or the like. In examples, the second housing member 98b may be permanently or removably coupled to the second housing member 98b. The second housing member 98b includes an access opening 98d to provide access to inside and outside of the enclosed chamber 98c.

Referring to FIGS. 9-10C, in the present example, the integrated multifunctional valve device 88 includes an integrated regulator valve 48a, a first pressure-actuated valve and a second pressure-actuated valve. The regulator valve 48a includes an actuator member such as the lever member 97b and an actuator ball 97a, the flexible disk member 94, the first seat member 95, the second seat member 96, the first port 92 and the second port 93. The regulator valve 48a has an open state corresponding to the open port position of the flexible disk member 94 and a closed state corresponding to the close port position of the flexible disk member 94. In the open port position, the flexible disk member 94 moves away from the second seat member 96. That is, the flexible disk member 94 moves away from the respective port 93. Thus, in the open state of the regulator valve 48a, the regulator valve 48a establishes fluid communication between the first port 92 and the second port 93. In the close port position, the flexible disk member 94 is urged against and extends across the first seat member 95 and the second seat member 96. That is, the flexible disk member 94 is urged towards the respective port 93. Thus, in the closed state of the regulator valve 48a, the regulator valve 48a stops the fluid communication between the first port 92 and the second port 93.

Referring to FIGS 9-10C, in the present example, the integrated multifunctional valve device 88 includes the flexible disk member 94, the first seat member 95, the second seat member 96 and the first port 92 to form a first pressure-actuated valve corresponding to the open state of the regulator valve 48a. The flexible disk member 94, the second seat member 96 and the second port 93 form a second pressure-actuated valve corresponding to the open state of the regulator valve 48a. That is, adequate pressure may urge at least a portion of the flexible disk member 94 against the second seat member 96 thereby covering the second port 93, even when the lever member 97b and actuator ball 97a do not move at least a portion of the flexible disk member 94 into the close port position (FIG. 10C).

In an example, the first pressure-actuated valve may include a free-fluid valve 48b and the second pressure-actuated valve may include a vent valve 48c. The free-fluid valve 48b may be configured to selectively transport air from the vent valve 48c into the free-fluid chamber 13. The vent valve 48c may be configured to selectively transport air from ambient atmosphere to the free-fluid valve 48b. In examples, one or more of the regulator valve 48a, the first pressure-actuated valve and the second pressure-actuated valve may be check valves. In the present example, each of the regulator valve 48a, the first pressure-actuated valve and the second pressure-actuated valve are check valves.

Referring to FIGS. 10A-10C, in an example, the integrated multifunctional valve device 88 may include a capillary relief valve 49. In an example, the flexible disk member 94, the first seat member 95, the first housing member 98a, the second seat member 96 and the second port 93 form a capillary relief valve 49 corresponding to the open position of the regulator valve 48a. In examples, the second housing member 98b, the actuator ball 97a, the flexible disk member 94, the first seat member 95, the first housing member 98a, the second seat member 96, and the second port 93 form a capillary relief valve 49 corresponding to the open position of the regulator valve 48a. The capillary path 99 may be configured to selectively transport air from the second port 93 to the regulated chamber 12. In an example, the capillary path 99 selectively transports air from the second port 93 to the regulated chamber 12 based on a respective state 15 of the regulated chamber 12 such as the backpressure regulation state 55b (FIG. 5B).

The present disclosure has been described using non-limiting detailed descriptions of examples thereof that are provided by way of example and are not intended to limit the scope of the present disclosure. It should be understood that features and/or operations described with respect to one example may be used with other examples and that not all examples of the present disclosure have all of the features and/or operations illustrated in a particular figure or described with respect to one of the examples. Variations of examples described will occur to persons of the art. Furthermore, the terms "comprise," "include," "have" and their conjugates, shall mean, when used in the disclosure and/or claims, "including but not necessarily limited to."

It is noted that some of the above described examples that are illustrative and therefore may include structure, acts or details of structures and acts that may not be essential to the present disclosure and which are described as examples. Therefore, the scope of the present disclosure is limited by the claims.

## Claims

1. An ink cartridge usable with an image forming apparatus, the ink cartridge comprising:
a housing unit (11);
a free-fluid chamber (13) disposed in the housing unit (11), the free-fluid chamber (13) configured to store fluid;
a regulated chamber (12) disposed in the housing unit (11) in fluid communication with the free-fluid chamber (13), the regulated chamber (12) including a regulator unit (14), an outlet and a plurality of states;
the regulator unit (14) configured to regulate a flow of the fluid therein;
the outlet (19) configured to transport the fluid from the regulated chamber (12); and
a plurality of valves (48a-48d) disposed in the housing unit (11), at least one of the plurality of valves (48a-48d) configured to selectively stop fluid communication between the regulated chamber (12) and the free-fluid chamber (13) based on the respective state of the regulated chamber (12),
wherein the plurality of valves comprise a wet flow valve (48d) configured to selectively establish fluid communication between the regulated chamber (12) and the free-fluid chamber (13), and a regulator valve (48a) configured to selectively establish fluid communication between the regulated chamber (12) and ambient atmosphere.

2. The ink cartridge according to claim 1, wherein the plurality of states include a backpressure regulation state, a hyperinflation priming and/or purging state, and a normal and/or altitude robust state.

3. The ink cartridge according to claim 1, wherein the plurality of valves further comprise one or more of:
a first vent valve (48b) configured to selectively establish fluid communication between the free-fluid chamber (13) and the ambient atmosphere, and a second vent valve (48c) configured to selectively establish fluid communication between the ambient air and the free-fluid chamber (13).

4. The ink cartridge according to claim 3, further comprising:
a capillary relief valve (49) formed by the flexible disk member, the first seat member, the first housing member, the second seat member and the second port corresponding to the open state of the regulator valve (48a), the capillary path may be configured to selectively transport air from the second port to the regulated chamber (12) based on a respective state of the regulated chamber (12).

5. The ink cartridge according to claim 4, wherein the plurality of valves comprise each of the wet flow valve (48d), the regulator valve (48a), the first vent valve (48b), the second vent valve (48c) and the capillary relief valve (49) such that at least one of the valves is a check valve.

6. The ink cartridge according to claim 1, wherein the regulator valve (48a) comprises a lever member configured to move to selectively open and close a port in response to an expansion of the regulator unit (14).

7. The ink cartridge according to claim 5, wherein, in a hyperinflation priming and/or purging state, the regulator unit (14) is configured to pressurize the regulated chamber (12) to a positive pressure to perform at least one of a priming function and a purging function, such that the wet flow valve (48d) is closed, the regulator valve (48a) is closed, the first vent valve (48b) is closed, the second vent valve (48c) is closed, and the capillary relief valve (49) is closed

8. The ink cartridge according to claim 5, wherein, in a backpressure regulation state, the regulator unit (14) is configured to form a negative pressure in the regulated chamber (12) to perform a controlled fluid delivery function, such that the wet flow valve (48d) is open, the regulator valve (48a) is open, the first vent valve (48b) is open, the second vent valve (48c) is open, and the capillary relief valve (49) is open.

9. The ink cartridge according to claim 5, wherein, in a normal and/or altitude robust state, the regulator unit (14) is in a partially expanded state configured to form a negative pressure in the regulated chamber (12) to perform at least a leak prevention function, such that the wet flow valve (48d) is open, the regulator valve (48a) is closed, the first vent valve (48b) is closed, the second vent valve (48c) is closed, and the capillary relief valve (49) is closed.

10. The ink cartridge according to claim 3, wherein the wet flow valve (48d) comprises a normally open pressure-actuated valve, the regulator valve (48a) is actuated by a lever actuator member (35) in response to an expansion of the regulator unit (14), the first vent valve (48b) comprises a normally open pressure-actuated valve, the second vent valve (48c) comprises a normally open pressure-actuated valve, and the capillary relief valve (49) comprises a normally closed relief valve.

11. An image forming apparatus, comprising:
an ink cartridge receiver for receiving the ink cartridge of one of claims 1 to 10,
a fluid detection chamber and
a fluid applicator assembly,
wherein the plurality of states of the regulator unit (14) includes a backpressure regulation state, a hyperinflation priming and/or purging state, and a normal and/or altitude robust state;
wherein the regulator unit (14) is configured to pressurize the regulated chamber (12) to a positive pressure to perform at least one of a priming function and a purging function of one or more of the fluid detection chamber, the regulated chamber (12) and the fluid applicator assembly in response to the regulated chamber (12) entering the hyperinflation priming and/or purging state.

12. The apparatus according to claim 11, wherein, in the backpressure regulation state, the regulator unit (14) is configured to form a negative pressure in the regulated chamber (12) to perform a controlled fluid delivery function; and, in the normal and/or altitude robust state, the regulator unit (14) is in a partially expanded state configured to form a negative pressure in the regulated chamber (12) to perform at least a leak prevention function.

## Patentansprüche

1. Farbkartusche, die mit einer Bildgebungsvorrichtung benutzbar ist, wobei die Farbkartusche Folgendes umfasst:
eine Gehäuseeinheit (11);
eine freie Fluidkammer (13), die in der Gehäuseeinheit (11) angeordnet ist, wobei die freie Fluidkammer (13) zum Speichern von Fluid konfiguriert ist;
eine regulierte Kammer (12), die in der Gehäuseeinheit (11) angeordnet ist und in Fluidverbindung mit der freien Fluidkammer (13) steht, wobei die regulierte Kammer (12) eine Regulatoreinheit (14), einen Auslass und mehrere Zustände beinhaltet;
wobei die Regulatoreinheit (14) zum Regulieren eines Flusses des darin enthaltenen Fluids konfiguriert ist;
wobei der Auslass (19) zum Transportieren des Fluids aus der regulierten Kammer (12) konfiguriert ist; und
mehrere in der Gehäuseeinheit (11) angeordnete Ventile (48a-48d), wobei mindestens eines der mehreren Ventile (48a-48d) zur selektiven Unterbindung der Fluidverbindung zwischen der regulierten Kammer (12) und der freien Fluidkammer (13), basierend auf dem jeweiligen Zustand der regulierten Kammer (12), konfiguriert ist;
wobei die mehreren Ventile ein Nassflussventil (48a) umfassen, das zur selektiven Herstellung einer Fluidverbindung zwischen der regulierten Kammer (12) und der freien Fluidkammer (13) konfiguriert ist, und ein Regulatorventil (48a), das zur selektiven Herstellung einer Fluidverbindung zwischen der regulierten Kammer (12) und der Umgebungsatmosphäre konfiguriert ist.

2. Die Farbkartusche nach Anspruch 1, wobei die mehreren Zustände einen Gegendruckregulierungszustand, einen Hyperbefüllungsansaug- und/oder -spülungszustand und einen normalen und/oder robusten Höhenzustand beinhaltet.

3. Die Farbkartusche nach Anspruch 1, wobei die mehreren Ventile ferner eines oder mehrere der Folgenden enthält:
ein erstes Belüftungsventil (48b), das zur selektiven Herstellung einer Fluidverbindung zwischen der freien Fluidkammer (13) und der Umgebungsatmosphäre konfiguriert ist, und ein zweites Belüftungsventil (48c), das zur selektiven Herstellung einer Fluidverbindung zwischen der Umgebungsluft und der freien Fluidkammer (13) konfiguriert ist.

4. Die Farbkartusche nach Anspruch 3, ferner umfassend:
ein kapillares Überdruckventil (49), das durch das flexible Scheibenelement, das erste Sitzelement, das erste Gehäuseelement, das zweite Sitzelement und den zweiten Port gebildet wird, der dem offenen Zustand des Regulatorventils (48a) entspricht, wobei der kapillare Weg zum selektiven Transport von Luft von dem zweiten Port zu der regulierten Kammer (12), basierend auf einem jeweiligen Zustand der regulierten Kammer (12), konfiguriert sein kann.

5. Die Farbkartusche nach Anspruch 4, wobei die mehreren Ventile jeweils ein Nassflussventil (48d), das Regulatorventil (48a), das erste Belüftungsventil (48b), das zweite Belüftungsventil (48c) und das kapillare Überdruckventil (49) umfassen, sodass mindestens eines der Ventile ein Rückschlagventil ist.

6. Die Farbkartusche nach Anspruch 1, wobei das Regulatorventil (48a) ein Hebelelement umfasst, das zum Bewegen konfiguriert ist, um einen Port als Antwort auf eine Ausdehnung der Regulatoreinheit (14) selektiv zu öffnen und zu schließen.

7. Die Farbkartusche nach Anspruch 5, wobei die Regulatoreinheit (14) in einem Hyperbefüllungsansaug- und/oder -spülungszustand dazu konfiguriert ist, die regulierte Kammer (12) auf einen Überdruck zu bringen, um mindestens eine von einer Ansaug- und einer Spülungsfunktion durchzuführen, sodass das Nassflussventil (48d) geschlossen ist, das Regulatorventil (48a) geschlossen ist, das erste Belüftungsventil (48b) geschlossen ist, das zweite Belüftungsventil (48c) geschlossen ist und das kapillare Überdruckventil (49) geschlossen ist.

8. Die Farbkartusche nach Anspruch 5, wobei die Regulatoreinheit (14) in einem Gegendruckregulierungszustand zum Bilden eines Unterdrucks in der regulierten Kammer (12) konfiguriert ist, um eine gesteuerte Fluidförderungsfunktion durchzuführen, sodass das Nassflussventil (48d) offen ist, das Regulatorventil (48a) offen ist, das erste Belüftungsventil (48b) offen ist, das zweite Belüftungsventil (48c) offen ist und das kapillare Überdruckventil (49) offen ist.

9. Die Farbkartusche nach Anspruch 5, wobei die Regulatoreinheit (14) in einem normalen und/oder robusten Höhenzustand in einem teilweise ausgedehnten Zustand zum Bilden eines Unterdrucks in der regulierten Kammer (12) konfiguriert ist, um mindestens eine Leckverhinderungsfunktion durchzuführen, sodass das Nassflussventil (48d) offen ist, das Regulatorventil (48a) geschlossen ist, das erste Belüftungsventil (48b) geschlossen ist, das zweite Belüftungsventil (48c) geschlossen ist und das kapillare Überdruckventil (49) geschlossen ist.

10. Die Farbkartusche nach Anspruch 3, wobei das Nassflussventil (48d) ein normalerweise offenes druckbetätigtes Ventil umfasst, wobei das Regulatorventil (48a) durch ein Hebelbetätigungselement (35) als Antwort auf eine Ausdehnung der Regulatoreinheit (14) betätigt wird, wobei das erste Belüftungsventil (48b) ein normalerweise offenes druckbetätigtes Ventil umfasst, das zweite Belüftungsventil (48c) ein normalerweise offenes druckbetätigtes Ventil umfasst und das kapillare Überdruckventil (49) ein normalerweise geschlossenes Überdruckventil umfasst.

11. Bildgebende Vorrichtung, umfassend:
eine Farbkartuschenaufnahme zum Aufnehmen der Farbkartusche nach einem der Ansprüche 1 bis 10,
eine Fluiddetektionskammer und
eine Fluidapplikatoranordnung,
wobei die mehreren Zustände der Regulatoreinheit (14) einen Gegendruckregulierungszustand, einen Hyperbefüllungsansaug- und/oder -spülungszustand und einen normalen und/oder robusten Höhenzustand beinhalten;
wobei die Regulatoreinheit (14) dazu konfiguriert ist, die regulierte Kammer (12) auf einen Überdruck zu bringen, um mindestens eine von einer Ansaugfunktion und einer Spülungsfunktion von einer oder mehreren der Fluiddetektionskammer, der regulierten Kammer (12) und der Fluidapplikatoranordnung als Antwort darauf durchzuführen, dass die regulierte Kammer (12) in den Hyperbefüllungsansaug- und/oder -spülungszustand eintritt.

12. Die Vorrichtung nach Anspruch 11, wobei die Regulatoreinheit (14) im Gegendruckregulierungszustand zum Bilden eines Unterdrucks in der regulierten Kammer (12) konfiguriert ist, um eine gesteuerte Fluidförderungsfunktion durchzuführen; und wobei die Regulatoreinheit (14) im normalen und/oder robusten Höhenzustand in einem teilweise ausgedehnten Zustand zum Bilden eines Unterdrucks in der regulierten Kammer (12) konfiguriert ist, um mindestens eine Leckverhinderungsfunktion durchzuführen.

## Revendications

1. Cartouche d'encre pouvant être utilisée avec un appareil de formation d'image, la cartouche d'encre comprenant :
une unité de boîtier (11) ;
une chambre de fluide en circulation (13) disposée dans l'unité de boîtier (11), la chambre de fluide en circulation (13) étant configurée pour stocker un fluide ;
une chambre régulée (12) disposée dans l'unité de boîtier (11) en communication fluidique avec la chambre de fluide en circulation (13), la chambre régulée (12) comprenant une unité de régulation (14), une sortie et une pluralité d'états ;
l'unité de régulation (14) étant configurée pour réguler un écoulement du fluide dans celle-ci ;
la sortie (19) étant configurée pour transporter le fluide provenant de la chambre régulée (12) ; et
une pluralité de clapets (48a-48d) disposés dans l'unité de boîtier (11), au moins l'un de la pluralité de clapets (48a-48d) étant configuré pour arrêter de manière sélective une communication fluidique entre la chambre régulée (12) et la chambre de fluide en circulation (13) sur la base de l'état respectif de la chambre régulée (12),
la pluralité de clapets comprenant un clapet d'écoulement humide (48d) configuré pour établir de manière sélective une communication fluidique entre la chambre régulée (12) et la chambre de fluide en circulation (13), et un clapet de régulation (48a) configuré pour établir de manière sélective une communication fluidique entre la chambre régulée (12) et une atmosphère ambiante.

2. Cartouche d'encre selon la revendication 1, dans laquelle la pluralité d'états comprennent un état de régulation de contrepression, un état d'amorçage et/ou de purge d'hyperinflation, et un état normal et/ou robuste en altitude.

3. Cartouche d'encre selon la revendication 1, dans laquelle la pluralité de clapets comprennent en outre un ou plusieurs parmi :
un premier clapet de mise à l'atmosphère (48b) configuré pour établir de manière sélective une communication fluidique entre la chambre de fluide en circulation (13) et l'atmosphère ambiante, et un second clapet de mise à l'atmosphère (48c) configuré pour établir de manière sélective une communication fluidique entre l'air ambiant et la chambre de fluide en circulation (13).

4. Cartouche d'encre selon la revendication 3, comprenant en outre :
un clapet de décharge capillaire (49) formé par l'élément de disque souple, le premier élément de siège, le premier élément de boîtier, le second élément de siège et le second orifice correspondant à l'état ouvert du clapet de régulation (48a), le chemin capillaire peut être configuré pour transporter de manière sélective de l'air du second orifice à la chambre régulée (12) sur la base d'un état respectif de la chambre régulée (12).

5. Cartouche d'encre selon la revendication 4, dans laquelle la pluralité de clapets comprennent chacun du clapet d'écoulement humide (48d), du clapet de régulation (48a), du premier clapet de mise à l'atmosphère (48b), du second clapet de mise à l'atmosphère (48c) et du clapet de décharge capillaire (49), de telle sorte qu'au moins l'un des clapets est un clapet anti-retour.

6. Cartouche d'encre selon la revendication 1, dans laquelle le clapet de régulation (48a) comprend un élément de levier configuré pour se déplacer pour ouvrir et fermer de manière sélective un orifice en réponse à une expansion de l'unité de régulation (14).

7. Cartouche d'encre selon la revendication 5, dans laquelle, dans un état d'amorçage et/ou de purge d'hyperinflation, l'unité de régulation (14) est configurée pour mettre sous pression la chambre régulée (12) à une pression positive pour réaliser au moins l'une d'une fonction d'amorçage et d'une fonction de purge, de telle sorte que le clapet d'écoulement humide (48d) est fermé, le clapet de régulation (48a) est fermé, le premier clapet de mise à l'atmosphère (48b) est fermé, le second clapet de mise à l'atmosphère (48c) est fermé, et le clapet de décharge capillaire (49) est fermé.

8. Cartouche d'encre selon la revendication 5, dans laquelle, dans un état de régulation de contrepression, l'unité de régulation (14) est configurée pour former une pression négative dans la chambre régulée (12) afin de réaliser une fonction de distribution de fluide contrôlée, de telle sorte que le clapet d'écoulement humide (48d) est ouvert, le clapet de régulation (48a) est ouvert, le premier clapet de mise à l'atmosphère (48b) est ouvert, le second clapet de mise à l'atmosphère (48c) est ouvert et le clapet de décharge capillaire (49) est ouvert.

9. Cartouche d'encre selon la revendication 5, dans laquelle, dans un état normal et/ou robuste en altitude, l'unité de régulation (14) est dans un état partiellement étendu configuré pour former une pression négative dans la chambre régulée (12) afin de réaliser au moins une fonction d'empêchement de fuite, de telle sorte que le clapet d'écoulement humide (48d) est ouvert, le clapet de régulation (48a) est fermé, le premier clapet de mise à l'atmosphère (48b) est fermé, le second clapet de mise à l'atmosphère (48c) est fermé, et le clapet de décharge capillaire (49) est fermé.

10. Cartouche d'encre selon la revendication 3, dans laquelle le clapet d'écoulement humide (48d) comprend un clapet actionné par pression normalement ouvert, le clapet de régulation (48a) est actionné par un élément d'actionnement de levier (35) en réponse à une expansion de l'unité de régulation (14), le premier clapet de mise à l'atmosphère (48b) comprend un clapet actionné par pression normalement ouvert, le second clapet de mise à l'atmosphère (48c) comprend un clapet actionné par pression normalement ouvert, et le clapet de décharge capillaire (49) comprend un clapet de surpression normalement fermé.

11. Appareil de formation d'image, comprenant :
un récepteur de cartouche d'encre pour recevoir la cartouche d'encre selon l'une des revendications 1 à 10,
une chambre de détection de fluide et
un ensemble applicateur de fluide,
la pluralité d'états de l'unité de régulation (14) comprenant un état de régulation de contrepression, un état d'amorçage et/ou de purge d'hyperinflation et un état normal et/ou robuste en altitude ;
l'unité de régulation (14) étant configurée pour mettre sous pression la chambre régulée (12) à une pression positive afin de réaliser au moins l'une d'une fonction d'amorçage et d'une fonction de purge d'un ou plusieurs de la chambre de détection de fluide, de la chambre régulée (12) et de l'ensemble applicateur de fluide en réponse à l'entrée de la chambre régulée (12) dans l'état d'amorçage et/ou de purge d'hyperinflation.

12. Appareil selon la revendication 11, dans lequel, dans l'état de régulation de contrepression, l'unité de régulation (14) est configurée pour former une pression négative dans la chambre régulée (12) afin de réaliser une fonction de distribution de fluide contrôlée ; et, dans l'état normal et/ou robuste en altitude, l'unité de régulation (14) est dans un état partiellement étendu configuré pour former une pression négative dans la chambre régulée (12) afin de réaliser au moins une fonction d'empêchement de fuite.
